# EUROPÄISCHE PATENTANMELDUNG

(11) **EP 1 731 741 A2**
(43) Veröffentlichungstag der Anmeldung: **13.12.2006**
(21) Anmeldenummer: 06114489.5
(22) Anmeldetag: 24.05.2006
(51) Int. Cl.: F02D 37/02, F02P 5/15, F02D 41/24

(54) **Verfahren zur Einstellung des Motormomentes eines Verbrennungsmotors**

(30) Priorität: 27.05.2005 DE 102005024333
(71) Anmelder: SIEMENS AKTIENGESELLSCHAFT, 80333 München (DE)
(72) Erfinder: Gallier, Marcus, 68259, Mannheim (DE)

(57) **Zusammenfassung**

Die Erfindung betrifft ein Verfahren zur Einstellung des Motormomentes eines Verbrennungsmotors, wobei ausgehend von einem Basismoment eine gewünschte Momentenänderung ermittelt und über eine Kennlinie aus der gewünschten Momentenänderung eine einzustellende Zündwinkeldifferenz bestimmt wird. Aus der gewünschten Momentenänderung (MG) werden dabei über eine erste Kennlinie (KL1), die eine Zuordnung zwischen Momentenänderung (M/Mₙₑₙₙ) und Zündwinkeldifferenz (ZW_{diff}) bei hohen und/oder mittleren Motorlasten abbildet, eine erste Zündwinkeldifferenz (Z1) und über eine zweite Kennlinie (KL2), die eine Zuordnung zwischen Momentenänderung (M/Mₙₑₙₙ) und Zündwinkeldifferenz (ZW_{diff}) bei niedrigen Motorlasten abbildet, eine zweite Zündwinkeldifferenz (Z2) ermittelt. Die einzustellende Zündwinkeldifferenz (ZE) wird anschließend durch Interpolation zwischen der ersten (Z1) und der zweiten (Z2) Zündwinkeldifferenz in Abhängigkeit von der aktuellen Motorlast (L) berechnet wird.

## Beschreibung

Die Erfindung betrifft ein Verfahren zur Einstellung des Motormomentes eines Verbrennungsmotors, wobei ausgehend von einem Basismoment eine gewünschte Momentenänderung ermittelt und über eine Kennlinie aus der gewünschten Momentenänderung eine einzustellende Zündwinkeldifferenz bestimmt wird.

Die DE 196 30 213 C1 offenbart ein Verfahren zur Motormomenteinstellung bei einem Verbrennungsmotor, bei dem ein von einem Fahrer angefordertes Motorsollmoment unterteilt wird in einen quasistatischen Sollmomentanteil und einen dynamischen Sollmomentanteil. Der quasistatische Sollmomentanteil wird bei einem Ottomotor über entsprechende Einstellung des Luftmassenstroms eingeregelt und der dynamische Sollmomentanteil wird als Vorgabe für eine Zündzeitpunktverschiebung herangezogen. Die Zündzeitpunktverschiebung wird dabei aus dem dynamischen Sollmomentanteil sowie in Abhängigkeit von der Motordrehzahl und der Motorlast anhand eines Kennfeldes bestimmt.
Wie die Bestimmung der Zündzeitpunktverschiebung im einzelnen erfolgt, ist nicht angegeben.

Das grundsätzliche Prinzip der Unterteilung in einen quasistatischen, langsamen und einen dynamischen, schnellen Pfad der Momenteneinstellung wird bei heutigen Verbrennungsmotoren angewandt, wobei das angeforderte Sollmoment nicht zwangsläufig in zwei Anteile unterteilt wird. Bei einem bekannten Verfahren zur schnellen Motormomenteneinstellung erfolgt die Ermittlung der Zündzeitpunktverschiebung über eine Kennlinie, welche einen Zusammenhang zwischen einer Motormomentänderung und einer zur Einstellung der Motormomentänderung erforderlichen Zündwinkeldifferenz beschreibt. Die Kennlinie stellt damit einen zweidimensionalen Kurvenverlauf dar. Die Motormomentänderung wird dabei als prozentualer Wert angegeben, indem das gewünschte Motormoment ins Verhältnis zu einem Nennmoment gesetzt wird. Die Zündwinkeldifferenz wird gebildet durch Subtraktion des für das gewünschte Motormoment einzustellenden Zündwinkels von dem für das Nennmoment einzustellenden Nenn-Zündwinkel.

Die Kennlinie gilt für alle Betriebspunkte des Verbrennungsmotors und damit für alle Motordrehzahlen und Motorlasten. Sie wird so ausgelegt, dass die über den gesamten Arbeitsbereich des Verbrennungsmotors auftretenden absoluten Momentenfehler unter einem einheitlichen Schwellwert bleiben, d. h., es werden bewusst Ungenauigkeiten in Kauf genommen, die aus der nicht optimal für alle Betriebspunkte geltenden Zuordnung zwischen Motormomentänderung und einzustellender Zündwinkeldifferenz resultieren.

Aufgabe der vorliegenden Erfindung ist es, bei dem bekannten Verfahren die Ungenauigkeiten in der Einstellung des Motormomentes zu verringern.

Diese Aufgabe wird mit einem Verfahren nach Anspruch 1 gelöst.

Der Erfindung liegt die Erkenntnis zugrunde, dass die Einhaltung eines absoluten Momentenfehlers insbesondere im Nierdiglastbereich zu einem hohen relativen Momentenfehler führen kann. Dies führt wiederum zu Einbußen im Fahrkomfort bzw. in der generellen Fahrfunktion, da angeforderte Momentenänderungen nicht präzise genug umgesetzt werden.

Als Lösung schlägt nun die Erfindung vor, anstatt einer Kennlinie für alle Betriebspunkte zwei Kennlinien für unterschiedliche Lastbereiche zu verwenden. Die erste der beiden Kennlinien bildet dabei die Zuordnung zwischen einer gewünschten Momentenänderung und der jeweils einzustellenden Zündwinkeldifferenz bei hohen und/oder mittleren Motorlasten ab, während die zweite Kennlinie diese Zuordnung bei niedrigen Motorlasten abbildet. Aus der aktuell gewünschten Momentenänderung wird über die erste Kennlinie eine erste Zündwinkeldifferenz und über die zweite Kennlinie eine zweite Zündwinkeldifferenz ermittelt. Die beiden Kennlinien werden als Einhüllende einer Kurvenschar verstanden. Mit der ersten und der zweiten Zündwinkeldifferenz sind also die zur aktuell gewünschten Momentenänderung gehörenden Extrema für bestimmt worden. Zwischen diesen Extrema wird anschließend in Abhängigkeit von der aktuell geltenden Motorlast interpoliert, woraus sich die tatsächlich einzustellende Zündwinkeldifferenz ergibt.

Mit diesem Verfahren wird der relative Momementenfehler über den gesamten Motorlastbereich und insbesondere bei kleinen Motorlasten reduziert und damit das Fahrverhalten verbessert.

Ausgestaltungen und Weiterbildungen der Erfindung werden nachfolgend anhand eines Ausführungsbeispiels und der Zeichnung näher erläutert. Es zeigen:
- Figur 1: eine für das bekannte Verfahren an einem Verbrennungsmotor ermittelte Motormomentänderung-Zündwinkeldifferenz-Kennlinie;
- Figur 2: die Inverse der Kennlinie aus Figur 1;
- Figur 3: am selben Motor für mehrere hohe Motorlasten ermittelte Kennlinien;
- Figur 4: am selben Motor für mehrere mittlere Motorlasten ermittelte Kennlinien;
- Figur 5: am selben Motor für mehrere niedrige Motorlasten ermittelte Kennlinien;

- Figur 6: die erste und die zweite Kennlinie als Einhüllende mit dazwischenliegender Kennlinie aus der Kurvenschar;
- Figur 7: ein Blockschaltbild eines Verfahrens zur Einstellung des Motormomentes über Zündwinkeländerung;
- Figur 8: am selben Motor für mehrere hohe Motordrehzahlen ermittelte Kennlinien;
- Figur 9: ein Blockschaltbild eines gegenüber Figur 7 inversen Verfahrens.

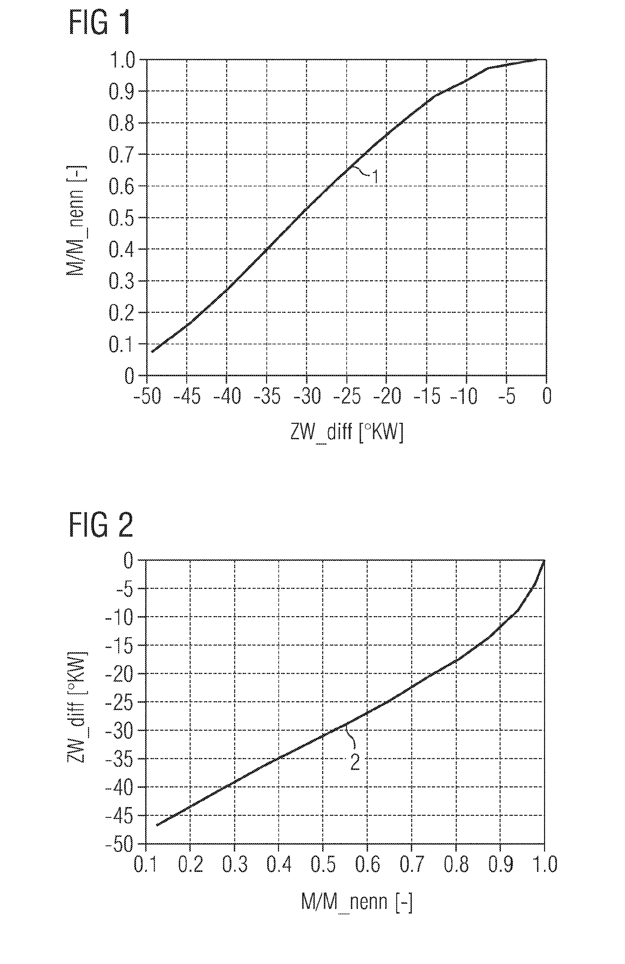

In Figur 1 ist eine für einen Verbrennungsmotor ermittelte Kennlinie 1 einer relativen Motormomentänderung M/Mₙₑₙₙ in Abhängigkeit von eingestellten Zündwinkeldifferenzen ZW_{diff} dargestellt. Die Kennlinie 1 wird dabei beispielsweise ermittelt, indem an einem Motorprüfstand ausgehend von einem Nennmoment Mₙₑₙₙ eine vorgegebene Zündwinkeldifferenz ZW_{diff} eingestellt und das resultierende Motormoment M gemessen wird. Das resultierende Motormoment M wird dann zum Nennmoment Mₙₑₙₙ ins Verhältnis gesetzt. Wie Figur 1 zu entnehmen ist, wurden ausschließich Motormomente M zwischen 0 und 100% des Nennmomentes Mₙₑₙₙ eingestellt, d. h., es handelt sich ausschließlich um Momentenreduktionen. Die die Momentenreduktionen verursachenden Zündwinkeldifferenzen ZW_{diff} bewegen sich in einem Wertebereich zwischen 0 und -50 Grad KW, also bezogen auf den oberen Totpunkt der Kurbelwelle KW.

Für das bekannte Verfahren zur Einstellung des Motormomentes wird die Kennlinie 1 invertiert und somit die Kennlinie 2 aus Figur 2 generiert. In dieser Kennlinie ist einer gewünschten Momentenänderung M/Mₙₑₙₙ eine dafür einzustellende Zündwinkeldifferenz ZW_{diff} zugeordnet.

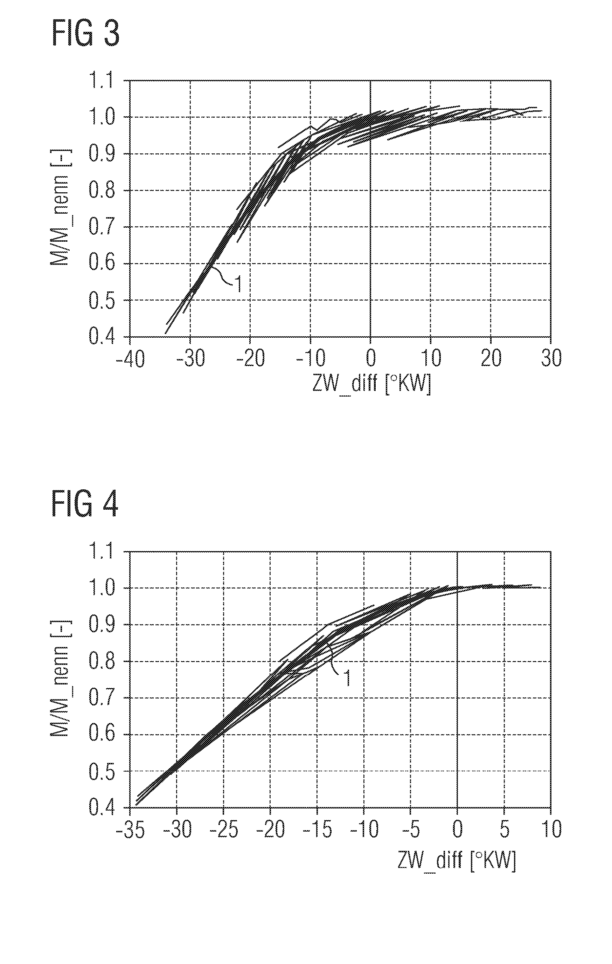

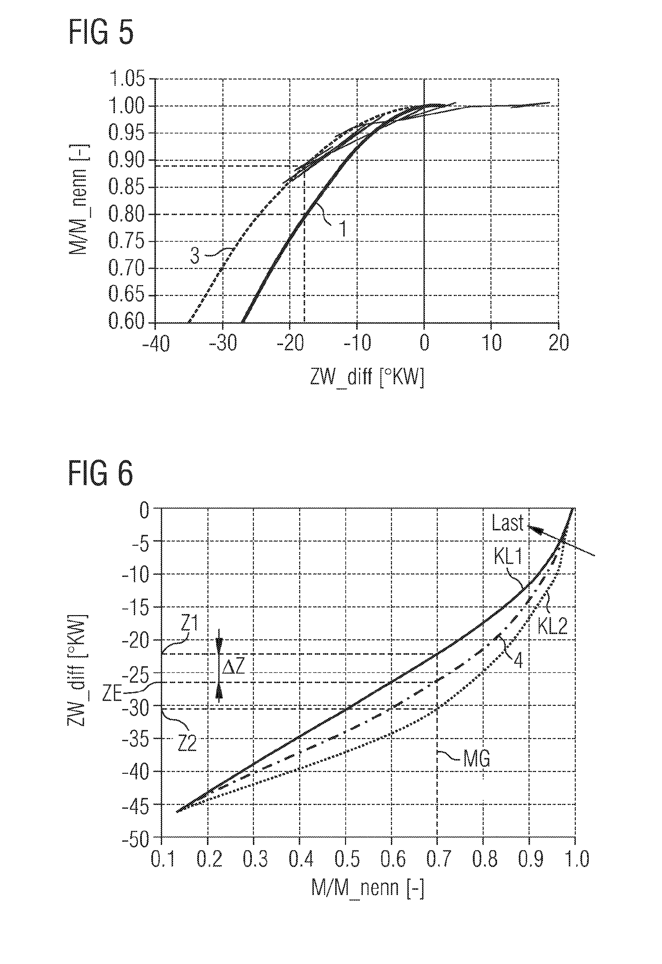

In Figur 3 sind mehrere für denselben Verbrennungsmotor ermittelte Kennlinien für unterschiedliche, hohe Motorlasten dargestellt. Über diese Kennlinien wurde die fett dargestellte Kennlinie 1 gelegt und man erkennt, dass die Kennlinie 1 den Arbeitsbereich hoher Motorlasten gut abdeckt. Bei mittleren Motorlasten, deren zugehörige Momentenänderung-Zündwinkel-Kennlinien in Figur 4 zu sehen sind, passt die Kennlinie 1 ebenfalls relativ gut. Erst bei den Kennlinien für unterschiedliche, niedrige Motorlasten aus Figur 5 wird eine deutliche Abweichung zu Kennlinie 1 sichtbar. Bei einer gewünschten Momentenänderung auf 80% vom Nennmoment würde gemäß der Kennlinie 1 eine Zündwinkeldifferenz von -17 °KW einzustellen sein. Dies führt jedoch bei niedrigen Motorlasten tatsächlich zu einer Momentenänderung auf rund 88% des Nennmomentes. Um diesen nicht unerheblichen Momentenfehler zu verhindern, wird entsprechend der Erfindung für niedrige Motorlasten eine weitere Kennlinie 3 eingeführt, die in Figur 5 gestrichelt eingezeichnet ist und dem Verlauf der ermittelten Kennlinien deutlich besser folgt als Kennlinie 1.

Für die Durchführung des Verfahrens zur Einstellung des Motormomentes werden die Inversen der Kennlinien 2 und 3 benötigt. Diese sind in Figur 6 dargestellt, wobei die erste Kennlinie KL1 der Kennlinie 2 aus Figur 2 entspricht und die zweite Kennlinie KL2 der Inversen der Kennlinie 3. Die erste und die zweite Kennlinie KL1 und KL2 laufen in ihren Anfangs- und Endbereichen in denselben Punkt. Sie bilden somit zwei Einhüllende, zwischen denen sich weitere gedachte Kennlinien desselben Kurvenverlaufs befinden, wie durch die Kennlinie 4 angedeutet ist. Ausgehend von Kennlinie KL2 wandern die gedachten Kennlinien 4 mit steigender Motorlast in Richtung der Kennlinie KL1. Bei Verbrennungsmotoren, bei denen die gemäß dem bekannten Verfahren verwendete Kennlinie 1 bzw. 2 auch für hohe Drehzahlen nicht optimal angepasst ist, kann natürlich auch die Kennlinie KL1 abweichend vom Verlauf der Kennlinie 2 gelegt werden. Wesentlich sollte dabei nur sein, dass die Kennlinien KL1 und KL2 den Bereich der den möglichen Motorlasten zugeordneten Kennlinien 4 umhüllen, dass sie also die Minima (Kennlinie KL2) bzw. Maxima (Kennlinie KL1) gut abdecken.

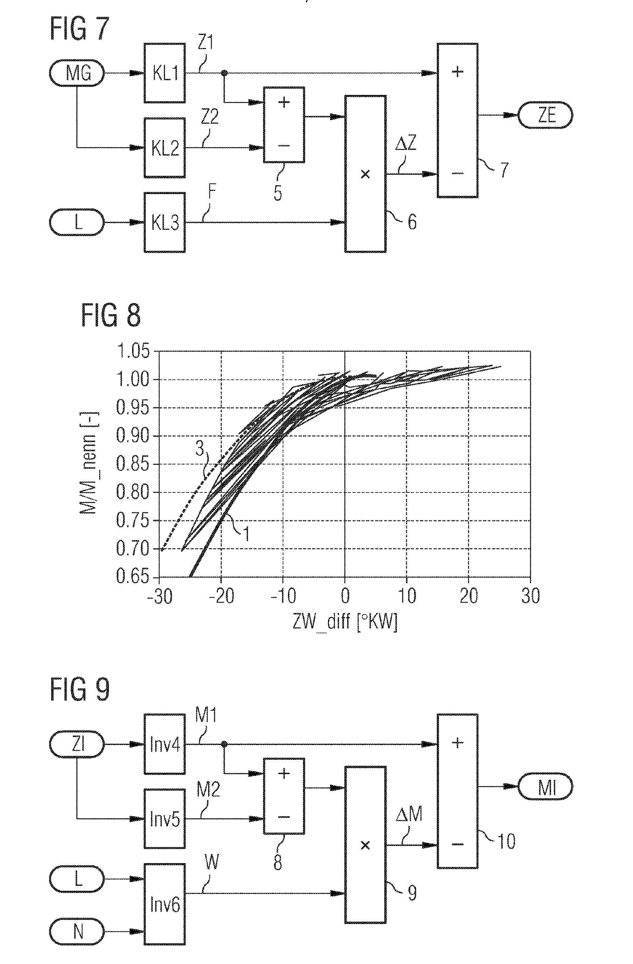

Eine Ausgestaltung des erfindungsgemäßen Verfahrens zur Einstellung des Motormomentes wird durch das Blockschaltbild aus Figur 7 wiedergegeben. Aus der gewünschten Momentenänderung MG wird mittels der Kennlinie KL1 die erste Zündwinkeldifferenz Z1 ermittelt. Angenommen, es soll ein Moment M von 60% des Nennmomentes Mₙₑₙₙ eingestellt werden (MG=0,6), so wird aus der Kennlinie KL1 eine erste Zündwinkeldifferenz von -27 °KW entnommen, wie es auch in Figur 6 dargestellt ist. Über die Kennlinie KL2 wird eine zweite Zündwinkeldifferenz Z2 bestimmt, die in dem Beispiel einem Wert von -35 °KW entspricht. Zwischen der ersten und der zweiten Zündwinkeldifferenz Z1 und Z2 wird nun interpoliert, um die lastabhängige Verschiebung ΔZ der Zündwinkeldifferenz von der ersten Kennlinie KL1 in Richtung der Kennlinie KL2 zu ermitteln. Dafür wird aus der aktuellen Motorlast L über eine dritte Kennlinie KL3 ein Wichtungsfaktor F bestimmt. Mit diesem Faktor F wird die Differenz aus erster und zweiter Zündwinkeldifferenz Z1-Z2 (Block 5) durch Multiplikation (Block 6) gewichtet, woraus die lastabhängige Verschiebung ΔZ resultiert. Der Faktor F liegt in einem Wertebereich zwischen Null und Eins, da die lastabhängige Verschiebung ΔZ aufgrund der Funktion der ersten und der zweiten Kennlinien KL1 und KL2 als Extrema nur maximal gleich der Differenz zwischen der ersten und zweiten Zündwinkeldifferenz Z1-Z2 sein kann. Die lastabhängige Verschiebung ΔZ wird in Block 7 von der ersten Zündwinkeldifferenz Z1 abgezogen und somit die einzustellende Zündwinkeldifferenz ZE errechnet. Für das oben genannte Beispiel der gewünschten Momentenänderung MG auf 0,6 wird gemäß Figur 6 eine einzustellende Zündwinkeldifferenz ZE von -31 °KW ermittelt.

In Figur 8 sind Kennlinien, die an demselben Verbrennungsmotor für alle Lasten L und für verschiedene, hohe Motordrehzahlen ermittelt wurden, eingetragen. Zusätzlich sind die Inversen der ersten und der zweiten Kennlinie KL1 und KL2, also die Kennlinien 1 und 3, eingezeichnet. Wie gut zu erkennen ist, bilden beide Kennlinien 1 und 3 den Zusammenhang zwischen Zündwinkeldifferenz ZW_{diff} und Motormomentenänderung M/Mₙₑₙₙ bei hohen Drehzahlen nur unzureichend ab. Um also die Momentenfehler weiter zu reduzieren, wird in einer Weiterbildung der Erfindung vorgeschlagen, die erste und die zweite Kennlinie KL1 und KL2 nicht nur lastabhängig sondern auch drehzahlabhängig auszubilden. Dementsprechend wird dann die einzustellende Zündwinkeldifferenz ZE durch Interpolation zwischen der ersten und der zweiten Zündwinkeldifferenz Z1 und Z2 in Abhängigkeit von der aktuellen Motorlast und der aktuellen Motordrehzahl ermittelt. Gemäß einer Ausgestaltung dieser Weiterbildung wird die erste Kennlinie so gewählt, dass sie die Zuordnung zwischen Momentenänderung M/Mₙₑₙₙ und Zündwinkeldifferenz ZW_{diff} bei hohen und/oder mittleren Motorlasten und bei hohen und/oder mittleren Motordrehzahlen abbildet. Und die zweite Kennlinie bildet diesen Zusammenhang bei niedrigen Motorlasten und niedrigen Motordrehzahlen ab. Die erste und die zweite Kennlinie bleiben also zweidimensional und nur die dritte Kennlinie wird zu einem dreidimensionalen Kennfeld, in das neben der Motorlast L die Motordrehzahl eingeht.

Das bisher beschriebene erfindungsgemäße Verfahren betrifft die Berechnung einer einzustellenden Zündwinkeldifferenz zur Erreichung einer gewünschten Momentenänderung. Natürlich ist es auch möglich, das selbe Verfahren, nur mit den jeweils invertierten Kennlinien, anzuwenden, um aus einer eingestellten Zündwinkeldifferenz eine zugehörige Momentenänderung betriebspunktabhängig zu ermitteln. Dieses inverse Verfahren wäre also zur Bestimmung des Istmomentes anhand der Istgrößen von Zündwinkeldifferenz ZI und Motorlast L bzw. anhand von Zündwinkeldifferenz ZI, Motorlast L und Motordrehzahl N geeignet. Letzteres ist in Figur 9 dargestellt. Die zu invertierende erste und zweite Kennlinie entsprechen den bereits beschriebenen zweidimensionalen last- und drehzahlabhängigen Kennlinien, aus deren Inversion die erste inverse Kennlinie Inv4 und die zweite inverse Kennlinie Inv5 resultieren. Als Drittes ist das dreidimensionale Kennfeld zu invertieren, woraus das inverse Kennfeld Inv6 entsteht. Über die erste und die zweite inverse Kennlinie Inv4 und Inv5 werden eine erste und eine zweite Momentenänderung M1 und M2 bestimmt. Die Differenz zwischen beiden Momentenänderungen M1-M2 wird in Block 8 ermittelt und diese wird in Block 9 mit einem aus der aktuellen Motorlast L und der aktuellen Motordrehzahl N über das inverse Kennfeld Inv6 generierten Wichtungsfaktor W multipliziert. Die daraus entstehende last- und drehzahlabängige Momentenverschiebung ΔM wird in Block 10 von der ersten Momentenänderung subtrahiert und somit die aufgrund der eingestellten Zündwinkeldifferenz ZI erfolgte Momentenänderung MI berechnet.

## Patentansprüche

1. Verfahren zur Einstellung des Motormomentes eines Verbrennungsmotors, wobei ausgehend von einem Basismoment eine gewünschte Momentenänderung ermittelt und über eine Kennlinie aus der gewünschten Momentenänderung eine einzustellende Zündwinkeldifferenz bestimmt wird, **dadurch gekennzeichnet ,**
- **dass** aus der gewünschten Momentenänderung (MG) über eine erste Kennlinie (KL1), die eine Zuordnung zwischen Momentenänderung (M/Mₙₑₙₙ) und Zündwinkeldifferenz (ZW_{diff}) bei hohen und/oder mittleren Motorlasten abbildet, eine erste Zündwinkeldifferenz (Z1) ermittelt wird,
- **dass** aus der gewünschten Momentenänderung (MG) über eine zweite Kennlinie (KL2), die eine Zuordnung zwischen Momentenänderung (M/Mₙₑₙₙ) und Zündwinkeldifferenz (ZW_{diff}) bei niedrigen Motorlasten abbildet, eine zweite Zündwinkeldifferenz (Z2) ermittelt wird und
- **dass** die einzustellende Zündwinkeldifferenz (ZE) durch Interpolation zwischen der ersten (Z1) und der zweiten (Z2) Zündwinkeldifferenz in Abhängigkeit von der aktuellen Motorlast (L) berechnet wird.

2. Verfahren nach Anspruch 1, **dadurch gekennzeichnet, dass** von der ersten Zündwinkeldifferenz (Z1) die entsprechend der aktuellen Motorlast (L) gewichtete Differenz zwischen der ersten und der zweiten Zündwinkeldifferenz (Z1-Z2) subtrahiert wird.

3. Verfahren nach Anspruch 2, **dadurch gekennzeichnet, dass** die Wichtung über einen Faktor (F) zwischen Null und Eins erfolgt, welcher aus der aktuellen Motorlast (L) über eine dritte Kennlinie (KL3) gewonnen wird.

4. Verfahren nach einem der vorhergehenden Ansprüche,
**dadurch gekennzeichnet , dass** die erste und die zweite Kennlinie zusätzlich drehzahlabhängig sind und dass die einzustellende Zündwinkeldifferenz durch Interpolation zwischen der ersten und der zweiten Zündwinkeldifferenz in Abhängigkeit von der aktuellen Motorlast (L) und von der aktuellen Motordrehzahl (N) berechnet wird.

5. Verfahren nach Anspruch 4, **dadurch gekennzeichnet , dass** die erste Kennlinie die Zuordnung zwischen Momentenänderung und Zündwinkeldifferenz bei hohen und/oder mittleren Motorlasten und bei hohen und/oder mittleren Motordrehzahlen abbildet und dass die zweite Kennlinie den Zusammenhang zwischen der Momentenänderung und der Zündwinkeldifferenz bei niedrigen Motorlasten und bei niedrigen Motordrehzahlen abbildet.

6. Verfahren nach einem der vorhergehenden Ansprüche,
**dadurch gekennzeichnet , dass** in analoger Weise die Inversen der ersten (Inv4) und der zweiten (Inv5) Kennlinie zur Berechnung einer erfolgten Momentenänderung (MI) aus einer eingestellten Zündwinkeldifferenz (ZI) verwendet werden.
